# EUROPEAN PATENT APPLICATION

(11) **EP 0 788 001 A1**
(43) Date of publication of application: **06.08.1997**
(21) Application number: 97101071.5
(22) Date of filing: 24.01.1997
(51) Int. Cl.: G02B 6/36, G02B 6/44

(54) **Fiber optic connector assembly and method of making same**

(30) Priority: 01.02.1996 JP 38930/96
(71) Applicant: MOLEX INCORPORATED, Lisle Illinois 60532 (US)
(72) Inventor: Aoki, Kazunori, Sagamihara-shi, Kanagawa (JP); Yagi, Masanori, Ebina-shi, Kanagawa (JP); Fujii, Hiroyuki, Asahi-ku, Yokohama-shi, Kanagawa (JP)
(74) Representative: Blumbach, Kramer & Partner

(57) **Abstract**

A fiber optic connector assembly (1) is provided for an optical fiber (4) fabricated of heat-expandable material. The assembly includes an elongated ferrule (2) having an axial passage (3) and a radial passage (6) communicating with the axial passage. The optical fiber (4) is positioned in the axial passage (3) in the ferrule and includes a heat-expanded portion (4b) projecting into the radial passage (6) in the ferrule (2) to lock the fiber against axial movement in either longitudinal direction relative to the ferrule.

## Description

### Field of the Invention

This invention generally relates to the art of fiber optic connectors and, particularly, to an assembly and method for locking an optical fiber in a ferrule.

### Background of the Invention

Fiber optic connectors of a wide variety of designs have been employed to terminate optical fiber cables and to facilitate connection of the cables to other cables or other optical fiber transmission devices. A typical optical fiber connector includes a ferrule which mounts and centers the optical fiber within the connector. The ferrule is mounted to some form of ferrule holder which is assembled within another body member of the connector. The ferrule may be fabricated of such material as ceramic, and the ferrule holder typically is molded from plastic material. When the ferrule holder is assembled within the body member of the connector, it is typically biased such that the ferrule yieldable projects from the connector for engaging another fiber-mounting ferrule of a mating connecting device. The fiber, in turn, projects slightly from the ferrule. The above description of fiber optic connectors is well known in the art.

One of the problems with fiber optic connectors is that the fiber has a tendency to move longitudinally in response to changes in environmental conditions, particularly in response to temperature changes. This is particularly true with plastic optical fibers and the shifting of the fibers can cause various problems, including the fibers projecting too far from the end of the ferrule or withdrawing within the ferrule.

In order to prevent such axial movement of an optical fiber within its ferrule, a number of approaches have been made in the prior art. For instance, the fiber may be inserted into an axial passage in the ferrule, with a portion of the fiber projecting from the end of the ferrule being heated and melted to form a flattened or enlarged end portion of the fiber. This enlarged end portion engages within an enlarged funnel or cylindrical shaped recess in the distal end of the ferrule in communication with the axial passage. Although this approach might prevent the fiber from retracting into the ferrule due to a temperature change, the fiber still can move axially outwardly of the ferrule end surface. Consequently, adhesives must be used with the enlarged recess. Unfortunately, there is not a wide variety of adhesives that are compatible with plastic optical fibers, and an organic solvent included in the adhesives may cause a change in the optical characteristics of the plastic optical fiber.

Another approach to solving the axial shifting problem has been to apply a significant pressure, such as in a radial direction, to the optical fiber cable on the outer insulating coating thereof. This approach causes problems in axially extending the end of the fiber and actually may result in as much as 0.2mm to 0.5mm excessive projection of the end of the fiber from the end of the ferrule. Such uncontrolled axial extension of the fiber results in unreliable connections.

Still another approach to the axial shifting problem has been to form an annular recess in the inner surface of the ferrule circumferentially about the axial passage which receives the optical fiber. After the fiber is inserted into the axial passage, it is heated to increase the diameter of the fiber, whereby the fiber expands into the annular recess. This approach is used primarily with plastic fibers. Unfortunately, the annular recess is formed on the inner surface of the axial passage of the ferrule, and the ferrule typically must be divided into two axial portions to form the annular recess, resulting in considerable manufacturing costs for producing such a ferrule at high precision. In addition, because of the internal location of the annular recess, the fiber in the area of the recess cannot be heated directly, and the engagement of the fiber within the recess is unreliable due to the unreliable heat transmission.

The present invention is directed to providing a new and improved system for axially locking an optical fiber within its ferrule.

### Summary of the Invention

An object, therefore, of the invention is to provide a new and improved fiber optic connector assembly of the character described, along with a method of fabricating the fiber optic connector assembly.

In the exemplary embodiment of the invention, a fiber optic connector assembly is adapted for an optical fiber fabricated of a heat expandable material, such as plastic. The assembly includes an elongated ferrule having an axial passage and a radial passage communicating with the axial passage. The optical fiber is positioned in the axial passage in the ferrule and includes a heat expanded portion projecting into the radial passage in the ferrule to lock the fiber against axial movement in either longitudinal direction relative to the ferrule.

As disclosed herein, a plurality of the radial passages are spaced circumferentially about the ferrule. The fiber is fabricated of plastic material such as polymethacrylate resin or polycarbonate resin.

The end of the ferrule also may include a recess formed about the axial passage. The optical fiber has a heat expanded end portion projecting into the recess. The recess preferably is funnel-shaped or flared radially outwardly toward the end of the ferrule.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a side elevational view of the ferrule and fiber assembly of the invention, with one-half of the ferrule in axial section;
FIGURE 2 is a top plan view of the assembly of Figure 1;
FIGURE 3 is an end elevational view of the assembly of Figure 2;
FIGURES 4-6 are views somewhat similar to that of Figure 1, but illustrating the process of forming the assembly; and
FIGURE 7 is an axial section through the end of a ferrule according to another embodiment of the invention.

### Detailed Description of the Preferred Embodiments

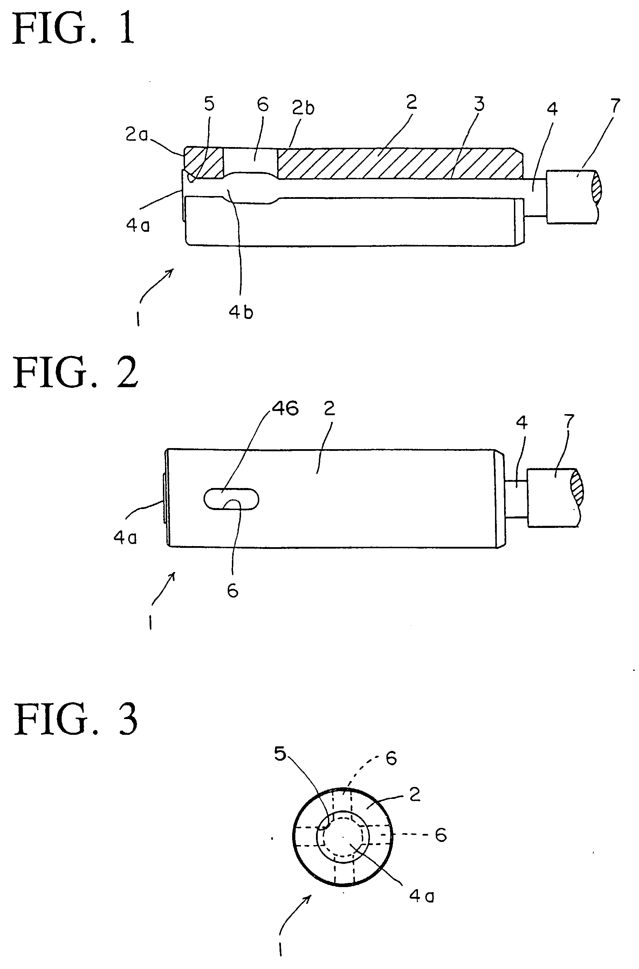

Referring to the drawings in greater detail, and first to Figures 1-3, a fiber optic connector assembly, generally designated 1, is shown according to one embodiment of the invention. The assembly includes a ferrule 2 having an axial passage 3 within which is inserted an optical fiber 4. Connector 1 is adapted for interconnection with a mating fiber of a complementary fiber optic connector or other connecting device by use of a coupling member (not shown) with both fibers axially aligned with each other.

It should be understood that the connector assembly and method of fabricating the assembly are applicable for use with an optical fiber fabricated of heat expandable material. Such a fiber typically would be a plastic fiber. The plastic may be a polymethacrylate resin, a polycarbonate resin or the like.

Referring back to Figures 1-3, ferrule 2 includes a recess 5 formed in a distal end surface 2a of the ferrule in communication with axial passage 3. Recess 5 is funnel-shaped or flared radially outwardly toward the end surface of the ferrule as best seen in Figure 1. In addition, at least one radial passage 6 is formed in ferrule 2 spaced axially inwardly of end surface 2a and communicating with axial passage 3. In the illustrated embodiment, four radial passages 6 are formed equally spaced circumferentially about ferrule 2 and axial passage 3.

Optical fiber 4 is inserted into axial passage 3 of ferrule 2 and has an enlarged end portion 4a which is engaged within recess 5. Four additional enlarged portions 4b are engaged within radial passages 6. End portion 4a of fiber 4 has a flat end surface which slightly projects axially from end surface 2a of ferrule 2. The fiber optic cable has an insulating coating 7 which is stripped from fiber 4 for a length thereof which is inserted into ferrule 2.

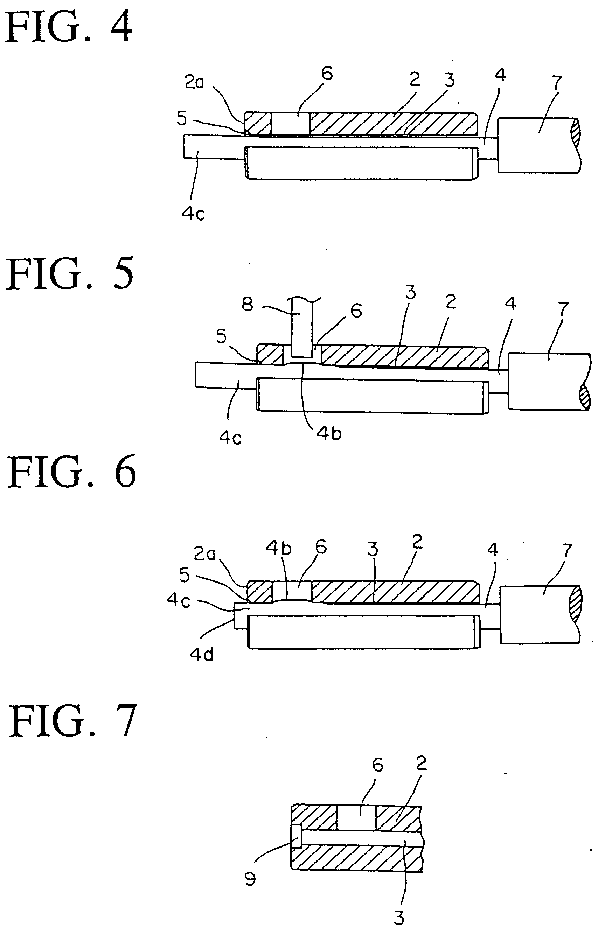

Figures 4-6 illustrate the method of fabricating fiber optic connector assembly 1. Referring first to Figure 4, fiber 4 is inserted into axial passage 3 of ferrule 2 until a length 4c of the fiber extends from end surface 2a of the ferrule.

Referring to Figure 5, a heating element 8 then is inserted into at least one of the radial passages 6 in ferrule 2 for heating a portion of the fiber which is exposed through the radial passage. As a result, a portion 4b of the fiber becomes enlarged and engages within radial passage 6. The enlargement of the fiber is based upon the nature of the fiber, such as of plastic material, produced by a drawing process whereby the material tends to expand when it is heated. Of course, radial passage 6 has a dimension large enough to insert the heating element thereinto. The fiber may be heated seriatim through the four radial passages, or a custom heating unit might be provided to heat the fiber through all radial passages simultaneously for mass production. The heating element(s) preferably has such discharge characteristics that the generated heat is directed towards the fiber from the end of the heating element, but not towards ferrule 2 from the sides of the heating element.

Referring to Figure 6, end portion 4c of fiber 4 projects from end surface 2a of ferrule 2, as described above, and the end portion of the fiber is cut, as at 4d. The end of the fiber then is pressed against a heating plate (not shown) to melt and enlarge end portion 4c of the fiber so that it engages within recess 5 of the ferrule and finished flat end 4a (Fig. 1) of the fiber is formed.

Although recess 5 in end surface 2a of ferrule 2 has been described above as being funnel-shaped, a recess 9 in the form of a cylinder may be formed as shown in Figure 7. The shape of the recess is not limited to a funnel shape or a cylindrical form but may be of other shapes as long as end portion 4c of fiber 4 can be pressed against the heating plate to melt and enlarge the end portion into engagement within the recess.

In addition, the number of radial passages 6 in ferrule 2 may not necessarily be four, as described above, and even one radial passage may be provided if it can attain the intended purpose. Furthermore, the degree of engagement between enlarged portion 4b of the fiber within radial passage 6 due to heating may be adjusted depending upon the application wherein connector assembly 1 is used and upon the linearly expansion coefficients of fiber 4 and ferrule 2. Although axial passage 3 in the ferrule has been shown as a single passage, there may be instances in which a plurality of axial passages are formed for double-passage or plural-passage structures. In such cases, it simply would be required that one end recess 5 and one radial passage 6 be formed for each of the axial passages. Because of the increased integrity afforded by the system of the invention, the extent of projection and retraction, or axial shifting, of fiber 4 relative to end surface 2a of ferrule 2 is minimized. The extent of axial shifting generally depends on the environmental conditions, such as temperature changes, and on the linear expansion coefficients of the materials of the ferrule and the fiber (e.g., polymethacrylate resin) especially in the area from end surface 2a to radial passage(s) 6 of the ferrule. Because of the small amount of expansion and compression of both materials of the ferrule and the fiber, which, together effect the integration due to engagement therebetween, the amount of axial shifting of the fiber is minimized.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. In a fiber optic connector assembly (1) for an optical fiber (4) fabricated of heat-expandable material, the assembly including
an elongated ferrule (2) having an axial passage (3) and a radial passage (6) communicating with the axial passage, and
said optical fiber (4) being positioned in the axial passage (3) in the ferrule (2) and including a heat-expanded portion (4b) projecting into the radial passage (6) in the ferrule to lock the fiber against axial movement in either longitudinal direction relative to the ferrule.

2. In the assembly of claim 1, including a plurality of said radial passages (6) spaced circumferentially about the ferrule (2).

3. In the assembly of claim 1, including a recess (5) formed in an end (2a) of the ferrule (2) about the axial passage (3), the optical fiber (4) having a heat expanded end portion (4d) projecting radially into the recess.

4. In the assembly of claim 3 wherein said recess (5) is flared radially outwardly toward the end of the ferrule (2).

5. A fiber optic connector assembly (1), comprising:
an elongated ferrule (2) having an axial passage (3) and a radial passage (6) communicating with the axial passage; and
an optical fiber (4) positioned in the axial passage (3) in the ferrule (2) and including a portion (4b) projecting into the radial passage (6) in the ferrule to lock the fiber against axial movement in either longitudinal direction relative to the ferrule.

6. The fiber optic connector assembly of claim 5, including a plurality of said radial passages (6) spaced circumferentially about the ferrule (2).

7. The fiber optic connector assembly of claim 5, including a recess (5) formed in an end (2a) of the ferrule (2) about the axial passage (3), the optical fiber (4) having an end portion (4d) projecting radially into the recess.

8. The fiber optic connector assembly of claim 7 wherein said recess (5) is flared radially outwardly toward the end of the ferrule (2).

9. The fiber optic connector assembly of claim 5 wherein said optical fiber (4) is fabricated of plastic material.

10. The fiber optic connector assembly of claim 9 wherein said optical fiber (4) is fabricated of polymethacrylate resin.

11. The fiber optic connector assembly of claim 9 wherein said optical fiber (4) is fabricated of polycarbonate resin.

12. A method of fabricating a fiber optic connector assembly (1), comprising the steps of:
providing an elongated ferrule (2) with an axial passage (3) and a radial passage (6) communicating with the axial passage;
positioning an optical fiber (4) in the axial passage of the ferrule, the fiber being fabricated of heat expandable material; and
heating the optical fiber (4) through the radial passage (6) in the ferrule (2) to expand a portion (4b) of the fiber radially outwardly into the radial passage (6) and thereby lock the fiber against axial movement in either longitudinal direction relative to the ferrule.

13. The method of claim 12, including providing the ferrule (2) with a plurality of said radial passages (6) spaced circumferentially about the ferrule, and heating the optical fiber (4) through all of the radial passages (6).

14. The method of claim 12, including providing a recess (5) in an end (2a) of the ferrule (2) about the axial passage (3), and including the step of heating an end portion (4d) of the optical fiber (4) to cause the fiber end to expand into the recess.

15. The method of claim 12 wherein said optical fiber (4) is provided of plastic material.

16. The method of claim 15 wherein said optical fiber (4) is provided of polymethacrylate resin.

17. The method of claim 15 wherein said optical fiber (4) is provided of polycarbonate resin.
